# EUROPÄISCHE PATENTSCHRIFT

(11) **EP 2 678 615 B1**
(45) Veröffentlichungstag und Bekanntmachung des Hinweises auf die Patenterteilung: **14.11.2018**
(21) Anmeldenummer: 12707220.5
(22) Anmeldetag: 21.02.2012
(51) Int. Cl.: F24S 10/70, F28F 3/12, F28F 21/08, F28F 9/18, B23P 15/26, B21C 23/14, H02S 40/44

(54) **FLACHWÄRMETAUSCHER**
FLAT HEAT EXCHANGER
ÉCHANGEUR DE CHALEUR PLAT

(30) Priorität: 22.02.2011 CH 307112011
(43) Veröffentlichungstag der Anmeldung: 01.01.2014
(73) Patentinhaber: Schneider, Walter, 9204 Andwil (CH)
(72) Erfinder: Schneider, Walter, 9204 Andwil (CH)
(74) Vertreter: Hasler, Erich
(86) Internationale Anmeldenummer: PCT/CH2012/000044
(87) Internationale Veröffentlichungsnummer: WO 2012/113087

(56) Entgegenhaltungen:
- EP-A2- 0 047 732
- WO-A1-97/08501
- WO-A1-2010/044789
- WO-A2-2010/128462
- DE-A1- 3 313 740
- GB-A- 938 888
- US-A- 4 497 363
- US-A- 5 411 015
- US-A1- 2011 088 753

## Beschreibung

### Gebiet der Erfindung

Die Erfindung betrifft einen Flachwärmetauscher gemäss Oberbegriff des Anspruchs 1 und die Verwendung eines Flachwärmetauschers gemäss Anspruch 12.

### Stand der Technik

Da die Wärmetransportwege und die Wärmeübergänge die Leistung eines Wärmetauschers beeinflussen, gibt es eine Vielzahl von Versuchen, möglichst grossflächige Wärmetauscherflächen, welche die Medien, zwischen denen thermische Energie übertragen wird, voneinander trennen, beidseitig möglichst direkt mit den Medien in Berührung zu bringen. Dies ist insbesondere bei Flachwärmetauschern der Fall.

Flachwärmetauscher weisen einen flächig ausgedehnten Durchströmungsraum für ein Wärmetransportmedium auf. Flachwärmetauscher weisen zumeist möglichst grossflächige, auf der Innen- und der Aussenseite mit den Medien in Berührung stehende und in etwa parallele Wandungen auf. Die Wandungen haben einen möglichst geringen Abstand zueinander und definieren daher einen möglichst dünnen Durchströmungsraum. Das Problem bei Flachwärmetauschern ist, dass sich ein grosser Innendruck aufbauen kann, beispielsweise, wenn das Wärmetransportmedium stark erhitzt wird oder der Flachwärmetauscher verstopft ist. Im schlimmsten Fall führt dies dazu, dass der Flachwärmetauscher undicht wird. Deshalb müssen die Wandungen an einer Vielzahl von Stellen innerhalb der Fläche zwischen den Rändern des Flachwärmetauschers miteinander verbunden sein. Die Zugbelastung auf die Verbindungsstellen ist beträchtlich.

In der WO 97/08501 ist ein Sonnenkollektor beschrieben, welcher aus einem plattenförmigen Metallhohlprofil hergestellt ist. Das Metallhohlprofil ist aus Aluminium stranggepresst. Das Metallhohlprofil besteht aus zwei planparallelen Schichten, die durch Längsstege miteinander verbunden sind. Der Abstand zischen den Schichten ist möglichst klein gehalten, um eine möglichst kleine Wärmeträgermenge auf eine möglichst hohe Temperatur aufzuheizen. Um den Schichtabstand möglichst gering zu hal ten, wird das Hohlprofil ausgewalzt. Dadurch besitzen die Schichten lediglich 3 mm Abstand oder weniger. Ein Abstand der Schichten von weniger als 1 mm ist nicht angestrebt, da bei solch geringen Schichtabständen der Strömungswiderstand des Wärmeträgers stark ansteigt. An den offenen Stirnseiten ist das Metallhohlprofil jeweils mit einer Sammelleitung verbunden. Dazu sind die Sammelleitungen mit Schlitzen versehen, in welche die offenen Enden des Metallhohlprofils dicht eingelassen sind.

In der GB 938,888 ist eine Wärmetauscherplatte offenbart, welche ein flaches Hohlprofil mit rechteckigem Querschnitt umfasst. In dem Hohlprofil sind in Richtung seiner Längsseiten Trennwände integriert, wodurch in dem Hohlprofil Kanäle ausgebildet sind. Die Wärmetauscherplatten werden durch Strangpressen von Aluminium oder einer Aluminiumlegierung hergestellt.

In der US 4,497,363 ist ebenfalls ein Wärmetauscher gezeigt, welcher aus Aluminium extrudiert ist.

In der WO 2010/128462 ist ein Solarmodul mit einem thermischen Panel und einem Photovoltaik-Panel, welches auf dem thermischen Panel angeordnet ist. Das thermische Panel ist durch Strangpressen von Aluminium gefertigt. Die offenen Enden des thermischen Panels werden durch Kappen verschlossen, welche die Einlass- bzw. Auslasskanäle des thermischen Panels miteinander verbinden. Die Kappen werden an das thermische Panel angeschraubt, wobei zwischen den Kappen und dem thermischen Panel Dichtungen wirken.

In der WO 2010/044789 ist ein thermischer Solarabsorber beschrieben, welcher in ein Gebäude integriert ist. Der Absorber kann aus extrudiertem Metall hergestellt sein. Auf die offenen Enden des Absorbers werden Sammelleitungen aufgesteckt. In dem Absorber und der Sammelleitung müssen sich deckende Öffnungen vorgesehen sein, um eine Strömungsverbindung für das Wärmeträgerfluid herzustellen. Die Sammelleitungen können mit dem Absorber verschweisst, vernietet oder verklebt sein.

Aus der EP 1 204 495 ist ein Flachwärmetauscher bekannt, bei welchem die Wandungen durch eine Vielzahl von Verbindungsstellen, welche über die Flächen der Wandungen verteilt sind, aneinander gehalten sind. Die Verbindungsstellen sind durch Verformung der Wandungsmaterialien ineinander verzahnt. Dadurch entstehen Verbindungsstellen, welche die Wandungen unter Betriebsdruck des Flachwärmetauschers zuverlässig aneinander halten. Das Verfahren zur Herstellung solcher Verbindung ist jedoch relativ aufwendig. Zur Herstellung der Verbindungsstellen sind weichere Metalle wie Kupfer gut geeignet. Kupfer besitzt zwar eine hervorragende Wärmeleitfähigkeit ist aber im Einkauf teuer und bedingt durch die gute Wärmeleitfähigkeit schwierig zu verschweissen.

Die GB 1 501 084 offenbart einen Wärmetauscher, welcher dem Sonnenlicht ausgesetzt wird, um das den Wärmetauscher durchströmende Wasser zu erhitzen. Der Wärmetauscher umfasst eine hohle Platte und ein Vorlauf- und ein Nachlaufrohr, welche durch die Platte wasserleitend verbunden sind. Die Platte hat eine flache Ober- und Unterseite, welche durch Stege miteinander verbunden sind. Zwischen den Stegen sind röhrenförmige Durchgänge gebildet. Die Platte ist aus einem hochkristallinen Polyolefin extrudiert. Zwar ist die Platte mit einer schwarzen Beschichtung überzogen, Wirkungsgrade, welche mit Metallwärmetauschern erzielt werden, können von Wärmetauschern aus Kunststoff jedoch nicht erreicht werden.

In der WO 93/15368 ist ein Solarkollektor gezeigt, welcher ein Platten-Rohrsystem, Verschlussendelemente und Verschlusskappen für die Verschlussendelemente umfasst. Das Fluid wird mittels der Verschlussendelemente auf das Platten-Rohrsystem verteilt und gesammelt. Das Platten-Rohrsystem ist aus einem transparenten oder teiltransparenten Kunststoff extrudiert. Die einzelnen Bestandteile des Solarkollektors sind miteinander verklebt oder verschweisst. Durch den Einsatz eines Kunststoffes ist der Solarkollektor kostengünstig herstellbar, der Wärmeübergang dieses Solarkollektors ist jedoch beschränkt. Auch ist die Stabilität im Vergleich mit Flachwärmetauschern aus Metall geringer. Dies ist insbesondere von Nachteil, wenn der Solarkollektor auf Dächern eingesetzt wird.

Die GB 2 290 863 beschreibt einen Solarerhitzer mit einem extrudierten Profil. Das extrudierte Profil kann mit weiteren extrudierten Profilen verbunden In dem Dokument ist es offen gelassen, aus welchem Material der Solarerhitzer gefertigt ist.

In der US 5,323,851 ist ein Kondensator für Klimaanlagen in Kraftfahrzeugen offenbart. In dem Kondensator sind zwischen einem Vorlauf- und einem Ablaufrohr flache Rohrleitungen mit einer Mehrzahl von Durchflussdurchgängen angeordnet. Die Durchflussdurchgänge sind durch Stege voneinander getrennt. Um den Wärmeübergang zu verbessern, sind die Stege entlang ihrer Längen von Perforationen unterbrochen. Die flachen Rohrleitungen sind aus Aluminium gefertigt und die Perforationen werden im geschmolzenen Zustand des Aluminiums mit Luftdüsen hergestellt. Die Abmessungen der flachen Rohrleitungen sind typisch für den Einsatz bei Klimakondensatoren im Kraftfahrzeugbereich und betragen in etwa 20 mm in der Länge und 2 mm in der Höhe. Für Solaranlagen hat dieser Kondensator viel zu geringe Abmessungen, wenngleich er den Vorteil besitzt, dass er aus Aluminium gefertigt ist und im Vergleich zu Kunststoffen eine gute Wärmeleitfähigkeit besitzt.

In der EP 1 342 970 ist ein Wärmetauscherrohr mit einer Mehrzahl von nebeneinander angeordneten Kühlpassagen beschrieben. Ein Vorlauf- und ein Nachlaufrohr sind durch eine Mehrzahl von diesen Wärmetauscherrohren verbunden. Zusammen mit Lamellen, welche zwischen den Wärmetauscherrohren positioniert sind, ist ein Klimakondensator eines Pkws aufgebaut. Die Wärmetauscherrohre sind ohne Aufwand aus Aluminium strangpressbar, da sie lediglich eine Breite von 10 bis 20 mm und eine Höhe von etwa 2 mm besitzen. Für Wärmetauscherrohre mit derartigen Querschnittsabmessungen und -formen ist das Strangpressen ein seit langem bekanntes Herstellungsverfahren.

### Aufgabe der Erfindung

Aufgabe der vorliegenden Erfindung ist es daher, einen Flachwärmetauscher zur Verfügung zu stellen, welcher rasch und mit geringem Aufwand und dementsprechend kostengünstig herstellbar ist. Ferner sollen zur Herstellung des erfindungsgemässen Flachwärmetauschers auch kostengünstigere Metalle als Kupfer geeignet sein.

### Beschreibung

Erfindungsgemäss wird die Aufgabe bei einem Flachwärmetauscher gemäss Anspruch 1 dadurch gelöst, dass der Wärmetauscherkörper in Gestalt eines Strangpressprofils ausgebildet ist, aus Aluminium oder einer Aluminiumlegierung stranggepresst ist und eine Breite von wenigstens 200 mm, bevorzugt wenigstens 300 mm und besonders bevorzugt wenigstens 400 mm aufweist, mit zwei voneinander beabstandeten Wandungen, welche an zwei gegenüberliegenden Seiten fluiddicht miteinander verbunden sind und innerhalb ihrer Flächen an einer Mehrzahl von Verbindungsstellen miteinander verbunden sind und einem Durchströmungsraum, welcher zwischen den zwei Wandungen definiert ist und zwei Sammelrohre, welche einen kreisförmigen Querschnitt aufweisen und welche an offenen gegenüberliegenden Seiten des Wärmetauscherkörpers fluiddicht angeordnet sind und in durchströmbarer Verbindung mit dem Durchströmungsraum stehen. Stranggepresste Aluminiumprofile, wie sie aus dem Stand der Technik bekannt sind, weisen eine Breite in der Grössenordnung von 20 mm auf und besitzen demzufolge eine viel zu kleine Oberfläche, um in Hybrid-Solarkollektoren verwendet werden zu können. Der erfindungsgemässe Flachwärmetauscher überwindet das technische Vorurteil, dass Aluminium-Strangpressprofile mit Breiten von etwa 500 mm nicht herstellbar wären. Es versteht sich, dass die Breite des stranggepressten Flachwärmetauschers bevorzugt die maximale Breite einnimmt, die durch das Herstellverfahren des Strangpressens herstellbar ist.

Erfindungsgemäß sind die den Sammelrohren zugewandten Enden des Wärmetauscherkörpers derart an die Krümmung der Sammelrohre angepasst, dass wenigstens eine Wandung eine Tangente an die Sammelrohre bildet, wodurch jeweils eine erzeugende Linie der Sammelrohre und eine Wandung in einer Ebene liegen. Eine solche Anordnung der Sammelrohre an dem Wärmetauscherkörper ermöglicht es, dass Photovoltaikzellen plan auf dem Wärmetauscherkörper und den Sammelrohrohren aufliegen können, ohne dass die Sammelrohre im Weg wären. Dadurch lässt sich ein direkter, vollflächiger Kontakt zwischen Photovoltaikzellen und Flachwärmtauscher herstellen, was für einen guten Wärmeübergang wichtig ist.

Ein weiterer unabhängiger Aspekt der Erfindung bezieht sich darauf, dass die zwei Sammelrohre jeweils eine Mehrzahl von Durchgangsöffnungen aufweisen, welche dem Durchströmungsraum zugewandt sind und mit dem Durchströmungsraum in Strömungsverbindung stehen. Die Mehrzahl von Durchgangsöffnungen bewirkt, dass die Sammelrohre im Wesentlichen entlang ihrer gesamten Länge in Strömungsverbindung mit dem Wärmetauscherkörper stehen und trotzdem ausreichend stabil bleiben, um mit dem Wärmetauscherkörper verschweisst werden zu können.

Der Wärmetauscherkörper ist durch seine Ausführung als Strangpressprofil rasch herstellbar, ohne dass die Wandungen des Wärmetauscherkörpers in einem weiteren Herstellungsschritt noch miteinander verbunden werden müssten. Das Strangpressprofil ist nach dem Auspressen aus der Strangpressmatrize lediglich auf die gewünschte Länge abzulängen. So können Flachwärmetauscherkörper jeder geforderten Länge hergestellt werden. Weiterhin ist der Wärmetaucherkörper rasch und nahezu vollautomatisch herstellbar, wodurch die Herstellkosten dementsprechend niedrig ausfallen können. Der im Strangpressverfahren hergestellten Wärmetauscherkörper ist jedoch nicht beliebig dünn herstellbar, wodurch der Durchströmungsraum ein relativ grosses Volumen aufweist. Um diesen Nachteil zu überwinden, betrifft ein weiterer unabhängiger Aspekt der Erfindung, dass das Durchströmungsvolumen des Durchströmungsraums durch Füllkörper reduziert ist. Die Füllkörper resp. Einbauten erlauben es, den Durchströmungsraum flexibel an die Anforderungen der Wärmeaustauschleistung anzupassen.

In einer besonders bevorzugten Ausführungsform weist der Wärmetauscherkörper eine Stärke von höchstens 20 mm, bevorzugt höchstens 15 mm und besonders bevorzugt höchstens 10 mm und von mindestens 2 mm, bevorzugt mindestens 5 mm und besonders bevorzugt mindestens 8 mm auf. Für einen möglichst guten Wärmeaustausch zwischen den Wandungen und dem Fluid sollen die Wandungen so nahe wie möglich aneinander liegen. Stranggepresste Profile mit oben beschriebenen Breiten sind jedoch fertigungstechnisch auf Stärken in der Grössenordnung von 10 mm limitiert. Dies hat jedoch den Vorteil, dass die Wärmetauscherkörper eine grosse Stabilität aufweisen. Bei Einsatz in Kombination mit Photovoltaikzellen als ein Hybridkollektor kann auf ein Gehäuse verzichtet werden, da der erfindungsgemässe Flachwärmetauscher ausreichende Stabilität besitzt, um Witterungsbelastungen, beispielsweise durch Schnee oder Wind hervorgerufen, aufzunehmen.

Bevorzugt sind die beiden Sammelrohre mit dem Wärmetauscherkörper verschweisst. Diese Verbindungsform garantiert eine stabile und fluiddichte Verbindung und lässt sich zugleich automatisieren. Grösstenteils gerade Schweissnähte, wie sie vorliegend benötigt werden, stellen heutzutage für Schweissroboter keine Probleme dar. Schweissroboter sind in der Lage die Schweissnähte sehr rasch und mit höchster Präzision herzustellen.

Zweckmässigerweise ist zwischen den Stirnseiten der Wandung, welche mit jeweils einer erzeugenden Linie der Sammelrohre in einer Ebene liegt, und den Sammelrohren ein Spalt vorgesehen. Dadurch ist es möglich, die Schweissnaht, welche insbesondere erhaben ist, wenn Schweisszusatzwerkstoffe verwendet werden, zwischen Sammelrohr und Wandung in dem Spalt aufzunehmen. Die Schweissnaht ist folglich nicht erhaben und ist beispielsweise im Nachhinein angebrachten Photovoltaikzellen nicht im Weg.

Die Durchgangsöffnungen haben vorteilhaft eine Gestalt, welche die Verwirbelung des Fluids beim Einströmen in den Durchströmungsraum verstärkt. Dies können verkleinerte rechteckige oder runde Durchgangsöffnungen sein. Denkbar sind auch kammartige oder zick-zack-artige Durchgangsöffnungen. Die verstärkte Verwirbelung führt in bekannter Weise zu einer verbesserten Wärmeaufnahme des Fluids.

In einer weiteren bevorzugten Ausführungsform sind zwischen den beiden Sammelrohren zwei oder mehr Wärmetauscherkörper angeordnet. Durch diese Anordnung wird der Nachteil überwunden, dass stranggepresste Wärmetauscherkörper momentan nur bis zu einer Breite von etwa 500 mm herstellbar sind, der Flachwärmetauscher jedoch Breiten von etwa 1 m für eine ausreichende Wärmetauscheroberfläche benötigt. In der Regel sind daher zwei nebeneinander angeordnete Wärmetauscherkörper ausreichend, um einen ausreichenden Wärmetausch zu ermöglichen. Falls Bedarf besteht, können jedoch auch mehr als zwei Wärmetauscherkörper nebeneinander angeordnet sein.

Zweckmässigerweise sind die zwei Wärmetauscherkörper entlang ihrer zugewandten Seiten wenigstens bereichsweise miteinander verschweisst. Das Ausrichten der Wärmetauscherkörper gegenüber den Sammelrohren, bevor diese Bauteile miteinander verschweisst werden, wird dadurch wesentlich erleichtert. Zum Aneinanderhalten der Wärmetauscherkörper sind grundsätzlich Heftschweissnähte im Bereich der offenen Enden der Wärmetauscherkörper ausreichend. Falls eine höhere Stabilität gefordert ist, können die Wärmetauscherkörper auch entlang ihrer gesamten zugewandten Längen miteinander verschweisst sein.

Als vorteilhaft erweist es sich, wenn diejenigen Durchgangsöffnungen der beiden Sammelrohre, welche im Bereich des Übergangs zweier nebeneinander angeordneten Wärmetauscherkörpern liegen, Kerben aufweisen. Diese Kerben ermöglichen eine Aufnahme der im letzten Absatz beschriebenen Schweissnähte zum Aneinanderhalten von benachbarten Wärmetauscherkörpern. Durch das Vorsehen der Kerben wird das Verschweissen der Sammelrohre mit den Wärmetauscherkörpern vereinfacht.

Dadurch, dass in den Durchströmungsraum Einbauten oder Füllkörper angeordnet sind, welche das Volumen des Durchströmungsraums reduzieren, kann ein ausreichender Wärmeübergang zwischen Wärmetauscherkörper und Fluid erreicht werden, obwohl die Stärke der Wärmetauscherkörper in der Grössenordnung von 10 mm liegt.

Die Einbauten oder Füllkörper reduzieren das Volumen des Durchströmungsraums vorteilhaft zwischen 20 und 80%, bevorzugt zwischen 30 und 70% und besonders bevorzugt zwischen 40 und 60%. Denkbar sind auch grössere oder geringere Volumenreduzierungen, falls es der Anwendungsfall erforderlich macht.

Bevorzugt handelt es sich bei den Einbauten um Stäbe, Hohlprofile oder Füllkörper, insbesondere Füllkugeln. Solche Profile erfüllen die Aufgabe einer Volumenreduktion in dem Durchströmungsraum auf einfache und kostengünstige Weise. Der fachkundige Leser wird erkennen, dass die Aufzählung solcher Einbauten nicht abschliessend zu verstehen ist und auch andere geeignete Einbauten eingesetzt werden können.

Dadurch, dass der lichte Abstand der beiden Wandungen vorteilhaft voneinander höchstens 5 mm, bevorzugt höchstens 3 mm und ganz besonders bevorzugt höchstens 2 mm beträgt, ist zwischen den beiden Wandungen ein sehr flacher Durchströmungsraum gebildet, in dem ein dünner Film des den Wärmetauscherkörper durchströmenden Wärmeübertragungsmediums aufgebaut werden kann. Diese Dimensionierung führt zu einem sehr guten Wärmeübergang zwischen Wärmetauscherkörper und Wärmeübertragungsmedium.

Zweckmässigerweise betragen die Wandstärken der Wandungen 0,4 bis 5 mm, bevorzugt 0,6 bis 3 mm und ganz bevorzugt 0,8 bis 1,5 mm. Durch die relativ dünne Wandstärke wird einerseits ein guter Wärmetransport von den Aussenseiten der Wandungen zu deren Innenseiten erzielt und andererseits ist nur ein geringer Materialeinsatz notwendig.

Mit Vorteil sind die Verbindungsstellen im Wesentlichen parallele Stege, welche sich entlang einer Vorzugsrichtung des Wärmetauscherkörpers, welche Vorzugsrichtung durch das Strangpressen definiert ist, erstrecken. Die Stege der beiden Wandungen brauchen nicht mehr zusätzlich miteinander verbunden werden, da die Stege automatisch durch die Formgebung der Matrize des Strangpressens ausgeformt werden. Zusätzliche Geräte, welche beispielsweise beim Vernieten von Blechbahnen zur Herstellung eines Wärmetauscherkörpers gemäss dem Stand der Technik notwendig sind, sind bei der Herstellung des erfindungsgemässen Wärmetauscherkörpers nicht notwendig.

Die Durchgangsöffnungen besitzen mit Vorteil eine Länge, welche im Wesentlichen dem Abstand zweier benachbarter Stege entspricht. Durch dieses Abmessungsmerkmal können die Durchgangsöffnungen eine Verlängerung der zwischen den Stegen gebildeten Durchströmungsräume sein.

In einer bevorzugten Ausführungsform sind die Sammelrohre derart an dem Wärmetauschkörper angeordnet, dass die Trennbereiche zwischen benachbarten Durchgangsöffnungen im Bereich der Stege liegen. Wie bereits im oberen Absatz beschrieben, bilden die Durchgangsöffnungen eine Verlängerung der Durchströmungsräume. Denkbar ist auch eine Anordnung, bei welcher die Stege innerhalb der Durchgangsöffnungen zu liegen kommen. Dies hat den Vorteil einer erhöhten Verwirbelung, da ein durch eine Durchgangsöffnung tretender Fluidstrom auf zwei benachbarte Durchströmungsräume aufgeteilt wird.

Die Abstände der Stege voneinander haben an ihren Übergängen zu den Wandungen einen maximalen Wert von 50 mm, bevorzugt von 40 mm und besonders bevorzugt von 30 mm und/oder einen minimalen Wert von 10 mm und bevorzugt von 20 mm. Durch diese Abstände der Stege ist einerseits eine gute Verwirbelung des Wärmeübertragungsmediums gesichert und andererseits ist der Durchströmungswiderstand in den Kanälen auf ein Mass begrenzt, sodass das Material des Wärmetauscherkörpers nicht übermässig stark ausgelegt werden muss.

Von Vorteil erweist es sich, wenn die Stege im Wesentlichen rechtwinkelig auf die Wandungen stehen, oder in Zick-Zack-Form, Wellenform oder Wabenform zwischen den Wandungen angeordnet sind. Alle diese Formen führen zu einer verbesserten Verwirbelung des Wärmeübertragungsmediums, wodurch wiederum die Wärmeübertragung verbessert wird. Der Formgebung der Stege sind lediglich dadurch Grenzen gesetzt, inwieweit diese von der Matrize der Strangpressanlage abbildbar sind.

In einem bevorzugten Ausführungsbeispiel haben die Stege eine Länge mit einem maximalen Wert von 40 mm bevorzugt von 30 mm und besonders bevorzugt von 20 mm und einem minimalen Wert von 5 mm und bevorzugt von 10 mm. Diese Abmessungen bewirken, dass die Stege noch ausreichende Festigkeit besitzen, um die Wandungen aneinander zu halten.

Dadurch dass zweckmässigerweise eine oder mehrere Durchgangsöffnungen quer zu den Stegen vorgesehen sind, wird die Verwirbelung des Wärmeübertragungsmediums noch weiter verbessert.

Mit Vorteil haben die Durchgangsöffnungen eine lichte Weite mit einem maximalen Wert von 50 mm bevorzugt von 40 mm und besonders bevorzugt von 30 mm und einem minimalen Wert von 10 mm und bevorzugt von 20 mm. Diese Dimensionierung bewirkt, dass die Durchgangsöffnungen eine ausreichende Verwirbelung erzeugen und auch nicht zu gross sind, damit über die Länge des Wärmetauscherkörpers noch eine ausreichende Anzahl von Stegen vorgesehen werden kann.

Der Wärmetauscherkörper ist aus Aluminium oder einer Aluminiumlegierung hergestellt. Dieses Metall hat einerseits gute Wärmeleitfähigkeiten und ist andererseits in einer Strangpressanlage gut verarbeitbar.

In einem besonders bevorzugten Ausführungsbeispiel ist der Wärmetauschkörper als ein einstückiges Strangpressprofil mit geschlossenem Umfang ausgebildet. Dies hat den technischen Effekt, dass der Wärmetauscherkörper an seinen Längsseiten nicht verbunden werden muss. Ein weiterer Arbeitsschritt, beispielsweise das Verschweissen oder Verlöten der Seitenränder, entfällt daher.

In einem weiteren besonders bevorzugten Ausführungsbeispiel ist der Wärmetauscherkörper aus einem ersten und zweiten Strangpressprofil gebildet, welche Profile jeweils eine der beiden Wandungen bilden. Die zweistückige Ausführung des Wärmetauscherkörpers bewirkt, dass der Widerstand an der Strangpressmatrize reduziert werden kann und einfache und dementsprechend kostengünstige Matrizen zur Herstellung der Strangpressprofile verwendbar sind.

Zweckmässigerweise ist an den einander zugewandten Seiten des ersten und zweiten Strangpressprofils eine Mehrzahl von Fortsätzen ausgebildet, welche paarweise unter Formschluss zusammenwirken und dadurch die Verbindungsstellen zwischen den beiden Wandungen bilden. Die technische Wirkung dieser Fortsätze besteht darin, dass die Wandungen durch einfaches Ineinanderschieben miteinander verbindbar sind und die Fortsätze sehr einfach durch Strangpressen herstellbar sind.

Vorteilhaft sind das erste und zweite Strangpressprofil entlang der Seitenränder, welche sich im Wesentlichen parallel zu den Fortsätzen erstrecken, fluiddicht miteinander verbunden. Diese Randverbindung kann beispielsweise durch Löten, Schweissen oder Aufpressen von Leisten erfolgen.

In einem weiteren Ausführungsbeispiel sind das erste und zweite Strangpressprofil lösbar, beispielsweise durch eine Dichtung, welche zwischen dem ersten und dem zweiten Strangpressprofil klemmend aufgenommen ist, miteinander verbunden. Die Möglichkeit, dass der Wärmetauscherkörper zerlegbar ausgeführt ist, ermöglicht beispielsweise eine vereinfachte Reinigung und den Austausch eines der Strangpressprofile, falls dieses während des Betriebs beschädigt wurde.

Mit Vorteil sind die Sammelrohre mit dem Wärmetauscherkörper entlang der Länge der Sammelrohre verschweisst oder verlötet. Dadurch können die Bauteile rasch und zuverlässig verbunden werden, es müssen an den Sammelrohren lediglich Durchlassöffnungen für den Übergang des Wärmeübertragungsmediums zwischen Sammelrohren und Wärmetauscherkörper vorgesehen sein. Ist ein Entfernen der Sammelrohre von dem Wärmetauscherkörper jedoch unvermeidbar, beispielsweise wenn der Wärmetauscherkörper zu reinigen ist, dann sind die Schweiss- bzw. Lötverbindungen zu lösen.

Ein weiterer Aspekt der Erfindung betrifft einen Hybridkollektor bestehend aus einem Flachwärmetauscher nach einem der vorangehenden Ansprüche und einer Mehrzahl von Photovoltaikzellen befestigt sind. Wie schon weiter oben beschrieben, hat der Flachwärmetauscher den Vorteil, dass er ausreichend stabil ist die Belastungen, welche auf einen Hybridkollektor im Einsatz wirken, aufzunehmen. Auf zusätzliche stabilisierende Bauelemente, wie ein Gehäuse, kann daher verzichtet werden.

Die Verbindung zwischen Flachwärmetauscher und Photovoltaikzellen ist bevorzugt durch Verkleben mit einem wärmeleitenden Klebstoff herstellbar, da das Verkleben rasch und kostengünstig durchführbar ist und der Wärmeübergang zwischen dem Flachwärmetauscher und den Photovoltaikzellen durch den Klebstoff nur unwesentlich beeinträchtigt wird.

Ein weiterer Aspekt der Erfindung betrifft die Verwendung des erfindungsgemässen Flachwärmetauschers als ein thermischer Kollektor oder in einem Hybridkollektor einer Solaranlage. Somit ist der Flachwärmetauscher für technische Anwendungen geeignet, welche als äusserst zukunftsträchtig und nachhaltig eingestuft werden.

Noch ein Aspekt der Erfindung betrifft ein automatisiertes Verfahren zur Herstellung eines Flachwärmetauschers nach Anspruch 1 umfassend die nacheinander folgenden Schritte:
- Herstellen eines Strangpressprofils resp. eines Wärmetauscherkörpers, wobei ein Metallpressling auf Umformtemperatur gebracht wird, mittels eines Stempels durch eine Matrize gepresst wird und das Strangpressprofil an einer bestimmten Länge abgeschnitten wird, wobei die Matrize derart ausgestaltet ist, dass das Strangpressprofil zwei gegenüberliegende Wandungen und eine Mehrzahl von die Wandungen verbindende Stege aufweist;
- Anpassen der Stirnseiten des Wärmetauscherkörpers an die Krümmung zweier an dem Wärmetauscherkörper stirnseitig anzuordnender Sammelrohre, vorzugsweise mittels vollautomatischer CNC-Fräsmaschinen;
- Vorsehen von einer Mehrzahl von Durchgangsöffnungen, in axialer Richtung der Sammelrohre, welche den Stirnseiten zugewandt sind; vorzugsweise mittels vollautomatischer CNC-Fräsmaschinen,
- Fluiddichtes Verschweissen der Sammelrohre mit den Stirnseiten des Wärmetauscherkörpers mittels eines vollautomatischen Schweissverfahrens, insbesondere einem Schweissroboter. Dieses Herstellungsverfahren hat den Vorteil, dass der Flachwärmetauscher nahezu vollständig automatisiert in Massenproduktion herstellbar ist. Dementsprechend kostengünstig ist ein nach diesem Verfahren hergestellter Flachwärmetauscher.

Weitere Vorteile und Merkmale ergeben sich aus der nachfolgenden Beschreibung mehrerer Ausführungsbeispiele der Erfindung unter Bezugnahme auf die schematischen Darstellungen. Es zeigen in nicht massstabsgetreuer Darstellung:
- Figur 1:: einen erfindungsgemässen Flachwärmetauscher in axonometrischer Darstellung;
- Figur 2:: ein Sammelrohr in Vorderansicht;
- Figur 3:: ein Sammelrohr und ein Ausschnitt eines Wärmetauscherkörpers in Seitenansicht;
- Figur 4:: das Sammelrohr und der Wärmetauscherkörper aus Figur 3 im zusammengesetzten Zustand;
- Figur 5:: eine Mehrzahl von verschieden ausgestalteten Durchgangsöffnungen an einem Sammelrohr;
- Figur 6:: den Wärmetauscherkörper in Vorderansicht mit Füllkörpern im Durchströmungsraum;
- Figur 7:: den Wärmetauscherkörper mit einer Platte im Durchströmungsraum
- Figur 8:: den Wärmetauscherkörper mit einem Hohlprofil im Durchströmungsraum;
- Figur 9:: einen einstückigen Wärmetauscherkörper in einer ersten Ausführungsform in axonometrischer Darstellung;
- Figur 10:: einen einstückigen Wärmetauscherkörper in einer zweiten Ausführungsform in axonometrischer Darstellung;
- Figur 11:: ein erstes Teil eines zweistückigen Wärmetauscherkörpers in axonometrischer Darstellung;
- Figur 12:: ein zweites Teil eines zweistückigen Wärmetauscherkörpers in axonometrischer Darstellung;
- Figur 13:: das erste und das zweite Teil aus Figur 4 und 5 im zusammengebauten Zustand und

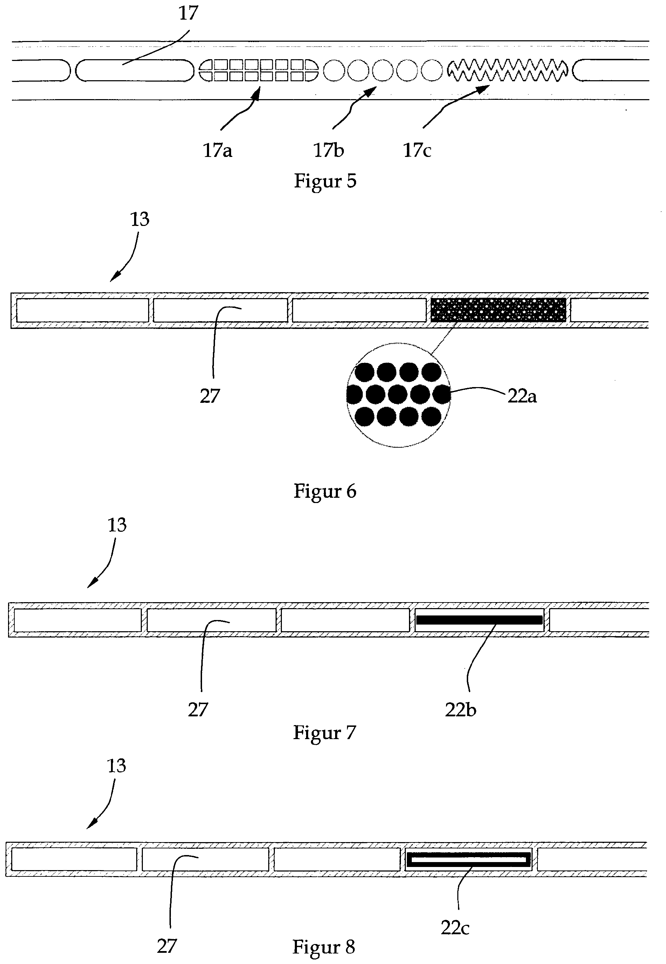

- Figur 7:: eine weitere Ausführungsform eines zweistückigen Wärmetauscherkörpers.

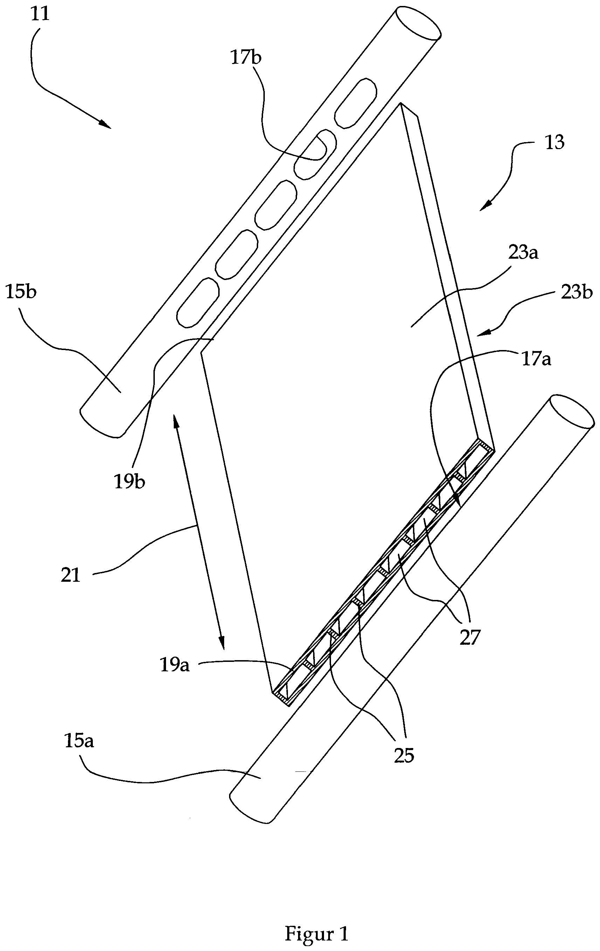

In Figur 1 ist ein erfindungsgemässer Flachwärmetauscher dargestellt, welcher gesamthaft mit der Bezugsziffer 11 bezeichnet ist. Der Flachwärmetauscher 11 besteht aus einem Wärmetauscherkörper 13 und einem ersten und zweiten Sammelrohr 15a,15b. Die Sammelrohre 15a,15b dienen der Verteilung und Sammlung eines Wärmetauschermediums auf den bzw. von dem Wärmetauscherkörper 13. Zur Strömungsverbindung des Wärmetauscherkörpers 13 mit den Sammelrohren 15a,15b sind an den Sammelrohren 15a,15b Durchgangsöffnungen 17 vorgesehen. Die Durchgangsöffnungen 17 sind ohne Aufwand herstellbar, indem beispielsweise Langlöcher in die Sammelrohre 15a,15b gefräst werden. Die Mehrzahl von Durchgangsöffnungen 17 erlauben eine ausreichende Strömungsverbindung zu dem Wärmetauscherkörper 13, ohne die Sammelrohre 15a,15b zu stark zu schwächen. Werden die Sammelrohre 15a,15b mit dem Wärmetauscherkörper 13 verschweisst, so werden diese thermisch stark belastet und könnten bei zu grossen Durchgangsöffnungen 17 während des Schweissvorgangs kollabieren. Die Mehrzahl von Durchgangsöffnungen 17 ermöglicht auch eine Verwirbelung des Fluids während des Eintritts in den Wärmetauscherkörper 13.

Beispielsweise können anstatt der Durchgangsöffnungen 17 auch Einschuböffnungen vorgesehen sein, in die die offenen Enden 19a,19b des Wärmetauscherkörpers einschiebbar sind. Die Abmessungen der Einschuböffnungen besitzen eine derartige Passtoleranz, dass sich die Enden 19a,19b gerade noch einschieben lassen. Die Sammelrohre 15a,15b können dann entlang des Rands der Einschuböffnungen mit dem Wärmetauscherkörper verbunden werden, beispielsweise verschweisst oder verlötet werden. Die Einschuböffnungen sind zwar rasch herstellbar, besitzen jedoch den Nachteil, dass die Sammelrohre nahezu entlang ihrer gesamten Länge geschwächt werden und während des Verschweissens zum kollabieren neigen.

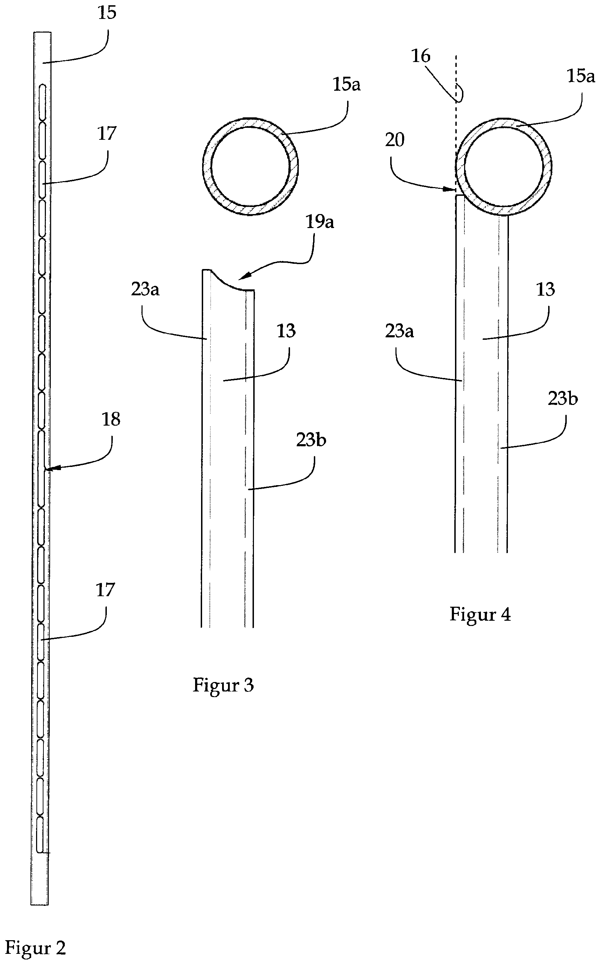

Figur 2 zeigt eine Vorderansicht eines Sammelrohrs 15 und eine Mehrzahl von an dem Sammelrohr 15 nebeneinander angeordneten Durchgangsöffnungen 17. Bevorzugt hat das Sammelrohr eine Länge von ca. 1 Meter. Da Wärmetauscherkörper 13, welche stranggepresst sind, momentan in einer maximalen Breite in der Grössenordnung von 500 mm herstellbar sind, ist es notwendig, wenigstens zwei Wärmetauscherkörper 13 nebeneinander zwischen den beiden Sammelrohren 15a,15b anzuordnen, damit der Flachwärmetauscher 11 eine Breite von ca. 1 Meter erreicht. In der Länge gibt es keine Einschränkungen, da Strangpressprofile heutzutage bis zu einer Länge von 60 Meter strangpressbar sind. Am Übergang von nebeneinander angeordneten Wärmetauscherkörpern 13 sind an den Sammelrohren 15a,15b Durchgangsöffnungen 17 mit Kerben 18 vorgesehen. Diese Kerben 18 bieten Schweissnähten Platz, welche vorher zumindest an den einander zugewandten Längsenden benachbarter Wärmetauscherkörper angebracht wurden.

In den Figuren 3 und 4 ist dargestellt, wie die Sammelrohre 15a,15b an dem Wärmetauscherkörper 13 angeordnet sind. Die Wandung 23a bildet eine Tangente 16 an die Sammelrohre 15a,15b. Eine erzeugende Linie des Sammelrohrs 15a und die Wandung 23a liegen daher in einer Ebenen. Entsprechend ist auch das zweite Sammelrohr 15b an dem Wärmetauscherkörper 13 angeordnet. Dies hat den Vorteil, dass Photovoltaikzellen (in den Figuren nicht dargestellt) auf dem Wärmetauscherkörper 13 plan aufliegen können, auch wenn sie über diesen in Richtung der Sammelrohre 15a,15b hinausragen. Die Verbindung zwischen Photovoltaikzellen und dem Flachwärmetauscher 11 ist durch flächiges Verkleben möglich, wobei der verwendete Klebstoff bevorzugt wärmeleitfähig ist.

Weiterhin ist in den Figuren 3 und 4 gezeigt, dass die offenen Enden 19a,19b an die Krümmung der Sammelrohre 15a,15b angepasst sind, um fluiddicht verschweissbar zu sein. Die Wandung 23a ist an ihren offenen Enden derart geformt, dass zwischen der Wandung 23a und den Sammelrohren 15a,15b Spalte 20 gebildet sind. In diesen Spalten 20 lassen sich Schweissnähte anbringen, welche nicht vorstehen, da sie in den Spalten 20 aufgenommen sind. Das plane Aufbringen der Photovoltaikzellen an dem Flachwärmetauscher 11 ist durch die Schweissnähte nicht behindert.

Da der Wärmetauscherkörper 13 produktionstechnisch eine Stärke von 10 mm momentan nicht unterschreiten kann, und die Wandungen 23a,23b nicht ausreichend nahe aneinander gebracht werden können um eine ausreichende Verwirbelung und eine hohe Strömungsgeschwindigkeit für einen guten Wärmeübergang zu erzielen, wurden untenstehende Optimierungen vorgenommen.

Zum einen können die Durchgangsöffnungen 17 verschieden Ausformungen besitzen, welche eine verbesserte Verwirbelung und eine reduzierte Durchflussgeschwindigkeit bewirken. Die Durchgangsöffnung 17a kann in mehrere, insbesondere mehreckige Durchgangsöffnungen unterteilt sein. Auch kann anstatt einer Durchgangsöffnung auch eine Mehrzahl von kreisrunden Löchern 17b oder eine zackige Ausgestaltung 17c vorgesehen sein, wobei diese Ausgestaltungsformen nicht als abschliessend zu verstehen sind.

Zum anderen führen Einbauten 20, welche in Durchströmungsräumen 27 angeordnet sind, zu einer erhöhten Strömungsgeschwindigkeit in dem Wärmetauscherkörper 13. Weiterhin können solche Einbauten 22 die Verwirbelung des Fluids verstärken. Als Einbauten sind in den Figuren 6 bis 8 exemplarisch Füllkörper 22a, insbesondere in Kugelgestalt, Füllstäbe 22b und Hohlprofile 22c verwendet. Der Flachwärmetauscher 11 besitzt durch seine Dimensionierung eine hohe Stabilität gegenüber Gewichtsbelastungen. Dies bringt den Vorteil mit sich, dass bei Verwendung des Flachwärmetauschers in einem Hybridkollektor kein weiteres Gehäuse notwendig ist, um eine ausreichende Stabilität des Hybridkollektors zu erreichen. Vielmehr wird ein einsatzbereiter Hybridkollektor dadurch erhalten, dass die Photovoltaikzellen auf dem Flachwärmetauscher befestigt, insbesondere angeklebt werden.

Wie schon vorstehend ausgeführt, ist der Wärmetauscherkörper 13 ein in einem Strangpressverfahren herstellbares Strangpressprofil. Der Wärmetauscherkörper 13 besitzt somit eine Vorzugsrichtung 21, welche sich zwischen den beiden Sammelrohren 15a,15b erstreckt, da der Wärmetauscherkörper entlang dieser Vorzugsrichtung 21 während des Strangpressens durch eine Matrize gepresst wird. Der Wärmetauscherkörper ist aus Aluminium oder einer Aluminiumlegierung stranggepresst.

Der Wärmetauscherkörper 13 ist in den Figuren 1, 9 und 10 ein einstückiges Strangpressprofil mit einem geschlossenen Umfang. Der Wärmetaucherkörper 13 ist von der ersten und zweiten Wandung 23a,23b, welche durch eine Mehrzahl von Stegen 25 miteinander verbunden sind, begrenzt. Zwischen den Stegen 25 ist eine Mehrzahl von Durchströmungsräumen 27 gebildet. Die Stege können auch durch im Nachhinein hergestellte Durchgänge unterbrochen sein (in den Figuren 1, 9 und 10 nicht gezeigt), um die Verwirbelung des den Wärmetauscherkörper 13 durchströmenden Wärmeträgermediums noch zu verstärken. Die Durchgänge sind durch Bohrungen quer zu den Stegen 25 in beliebigen Abständen und Durchmessern herstellbar, sofern die Durchmesser nicht die Höhe der Stege 25 übersteigen. Die Durchgänge, welche zwangsläufig an den Seiten entstehen, an denen die Wandungen 23a,b fluiddicht miteinander verbunden sind, sind nach Herstellung der Durchgangsbohrungen wieder zu verschliessen. Durch das Strangpressen ist der Wärmetauscherkörper einfach und rasch herstellbar, ohne dass die Wandungen im Nachhinein noch miteinander verbunden werden müssten. Die Durchgangsöffnungen 17 besitzen vorzugsweise eine Länge, welche dem Abstand der Stege 25 entspricht, können jedoch auch kürzer sein und beispielsweise nur die Hälfte der Länge der Durchgangsöffnungen 17 aufweisen. Die Durchgangsöffnungen 17 sind an den Sammelrohren derart vorgesehen, dass sie in der Verlängerung der Durchströmungsräume 27 liegen, da die Trennbereiche 24 der Durchgangsöffnungen 17 mit den Stegen 25 im Wesentlichen fluchten. Das Fluid bzw. Wärmeübertragungsmedium kann daher ohne Widerstand durch die Durchgangsöffnungen 17 direkt in die Durchströmungsräume ein- und austreten. In diesem Fall sind die Stege 25 daher zwischen den Durchgangsöffnungen 17 angeordnet. Um eine zusätzliche Verwirbelung zu erzielen, ist es auch denkbar, dass die Durchgangsöffnungen derart angeordnet sind, dass der Fluidstrom, welcher durch die Durchgangsöffnungen fliesst, durch die Stege in zwei benachbarte Durchströmungsräume 27 aufgeteilt wird. In diesem Fall sind die Stege 25 innerhalb der Durchgangsöffnungen 17 angeordnet. Auch ist es denkbar, dass die Sammelrohre 15a,15b Durchgangsöffnungen 17a,17b aufweisen, welche unterschiedlich dimensioniert sind, um die Strömungsgeschwindigkeit des Fluids anzupassen.

Um möglichst wenig Material für den Wärmetauscherkörper 13 zu benötigen und damit eine gute Wärmeleitung innerhalb der Wandungen 23a,23b vorhanden ist, sind die Wandungen 23a,23b möglichst dünn gehalten. Bevorzugt sind Wandungsstärken von 1 mm und weniger. Der Abstand der Stege beträgt bevorzugt ca. 25mm.

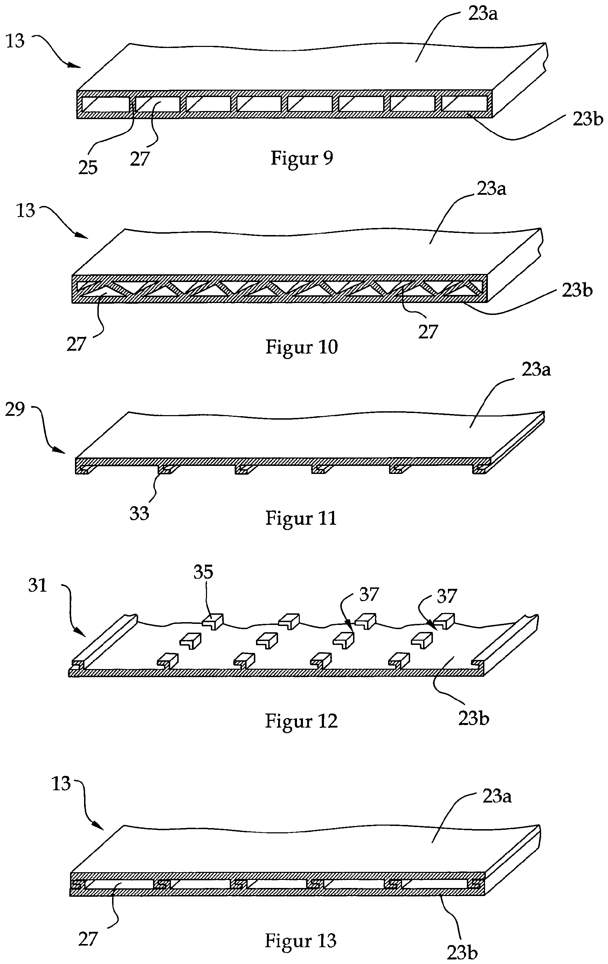

Wie die Figur 10 zeigt, können die Stege 25 auch andere Formen besitzen, um die Wärmeübertragung zu verbessern. Neben der in Figur 10 gezeigten Zick-Zack-Form sind auch wellenförmige oder wabenförmige Verbindungen zwischen den Wandungen 23a,23b denkbar. Auch andere Formen sind möglich, sofern diese durch die Matrizenform einer Strangpressanlage herstellbar sind. Die Breite des Wärmetauscherkörpers 13 beträgt bevorzugt zwischen 500 und 600 mm. Durch das Strangpressverfahren ist der Wärmetauscherkörper 13 in jeder beliebigen Länge herstellbar.

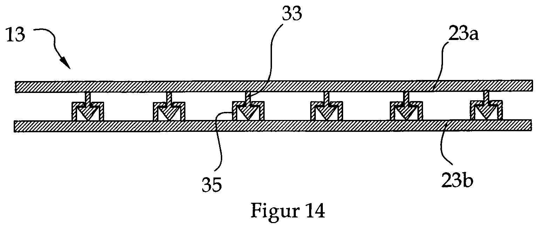

Wie in den Figuren 11 bis 14 gezeigt ist, kann der Wärmetauscherkörper 13 auch aus einem ersten und zweiten Strangpressprofil 29,31 gebildet sein. Das erste und zweite Strangpressprofil 29,31 besitzen ebenfalls eine Wandung 23a bzw. 23b, welche an ihren einander zugewandten Seiten mit Fortsätzen versehen sind. In dem Ausführungsbeispiel der Figuren 11 bis 13 sind die Fortsätze L-förmig ausgebildet. Die Fortsätze 33,35, welche zwischen den Längsseiten der beiden Strangpressprofile liegen, sind dann gebildet, wenn die während des Strangpressens hergestellten Fortsätze durch Durchgangsöffnungen 37 durchbrochen sind. Die Durchgangsöffnungen 37 sind nach dem Strangpressen der Profile 29,31 herzustellen, indem sie zwischen den stranggepressten Fortsätzen durch Materialabtrag, wie Fräsen oder Bohren, gebildet werden. Die lichte Weite der Durchgangsöffnungen 37 beträgt bevorzugt ca. 25 mm und die Fortsätze 33,35, welche zwischen den Durchgangsöffnungen 37 stehen, haben eine bevorzugte Breite von 15 mm.

Wie Figur 13 zeigt, sind die die L-förmigen Fortsätze 33,35 derart dimensioniert, dass sie durch Verschieben der Strangpressprofile 29,31 zueinander quer zur Vorzugsrichtung 21 unter Formschluss ineinandergreifen. Die Längsseiten des ersten und zweiten Strangpressprofils können dauerhaft verschweisst oder verlötet werden. Ist eine wieder lösbare Verbindung zwischen den Strangpressprofilen 29 und 31 gefordert, so können diese beispielsweise in bekannter Art einer Flanschverbindung durch Dichtungen entlang ihrer Längseiten und durch Vorspannung der Dichtungen mittels Schrauben fluiddicht miteinander verbunden sein. Eine lösbare Verbindung kann beispielsweise von Vorteil sein, wenn die Durchströmungsräume 27 des Wärmetauschkörpers 13 im Zuge von Wartungsarbeiten gereinigt werden sollen. In Figur 7 ist eine weitere Form von Fortsätzen 33 und 35 gezeigt, welche die Wandungen 23a,23b aneinanderhalten. Die Ausführungsbeispiele der Formschlüsse sind nicht abschliessend zu verstehen, da aus dem Stand der Technik eine Vielzahl von formschlüssigen Verbindung bekannt sind, welche zur Verbindung der Wandungen 23a,23b denkbar sind.

Der beschriebene Flachwärmetauscher 11 eignet sich hervorragend zur Verwendung als thermischer Kollektor in einer Solaranlage, da er durch seine flache Bauform einen sehr guten Wärmeübergang besitzt und einfach auf Hausdächern oder Hauswänden installiert werden kann. Der Einsatz des erfindungsgemässen Flachwärmetauschers in Hybridkollektoren, welche die Vorteile der Photovoltaik-Kollektoren mit denen von thermischen Solarkollektoren verbinden, ist besonders erwünscht.

Der Flachwärmetauscher 11 lässt sich grösstenteils vollautomatisiert herstellen und ist in seiner Herstellung dementsprechend kostengünstig. Die Herstellung des Flachwärmetauschers erfolgt in den folgenden Schritten:
Zuerst wird der Wärmetauscherkörper 11 hergestellt, indem ein Metallpressling auf Umformtemperatur gebracht wird, mittels eines Stempels durch eine Matrize gepresst wird und das Strangpressprofil an einer bestimmten Länge abgeschnitten wird, wobei die Matrize derart ausgestaltet ist, dass das Strangpressprofil zwei gegenüberliegende Wandungen und eine Mehrzahl von die Wandungen verbindende Stege aufweist. Die Stirnseiten des Wärmetauscherkörpers 11 werden an die Krümmung der zwei dem Wärmetauscherkörper stirnseitig angeordneten Sammelrohre 15a,15b abgepasst, vorzugsweise mittels vollautomatischer CNC-Fräsmaschinen. Dabei wird die Wandung 23a an ihren Stirnseiten bevorzugt dergestalt bearbeitet, dass sich bei Zusammensetzten des Flachwärmetauschers 11 zwischen den Sammelrohren 15a,15b und der Wandung 23a der Spalt 20 bildet. Die Mehrzahl von Durchgangsöffnungen 17 wird vorzugsweise mittels vollautomatischer CNC-Fräsmaschinen an den Längen der Sammelrohre, den Stirnseiten des Wärmetauscherkörpers 11 zugewandt, hergestellt. Abschliessend werden die Sammelrohre mit den Stirnseiten des Wärmetauscherkörpers mittels eines vollautomatischen Schweissverfahrens, insbesondere einem Schweissroboter, fluiddicht verschweisst. Bevorzugt werden bei Anordnung von mehr als einem Wärmetauscherkörper 13 zwischen den Sammelrohren 15a,15b diese Wärmetauscherkörper miteinander zumindest bereichsweise verschweisst, um die Wärmetauscherkörper 13 leichter zwischen den Sammelrohren 15a,15b ausrichten zu können. Dazu sind Heftschweissnähte grundsätzlich ausreichend. Nach diesem Herstellverfahren sind die Flachwärmetauscher 11 im Wesentlichen vollautomatisch in Massenproduktion herstellbar, wodurch die Herstellkosten im Vergleich zu Flachwärmetauschern des Stands der Technik mit solchen Abmessungen signifikant niedriger sind.

### Legende:

- 11: Flachwärmetauscher
- 13: Wärmetauscherkörper, Strangpressprofil
- 15a,15b: Erstes und zweites Sammelrohr
- 16: Tangente an Sammelrohr
- 17: Durchgangsöffnungen
- 18: Kerben
- 19a,19b: Offene Enden des Wärmetauscherkörpers
- 20: Spalte
- 21: Vorzugsrichtung
- 22: Füllkörper, Einbauten
- 23a,23b: Wandungen
- 24: Trennbereiche
- 25: Stege
- 27: Durchströmungsräume
- 29: Erstes Strangpressprofil
- 31: Zweites Strangpressprofil
- 33: Fortsätze
- 35: Fortsätze
- 37: Durchgänge

## Patentansprüche

1. Flachwärmetauscher (11), insbesondere als Support für Photovoltaikzellen, umfassend
- einen Wärmetauscherkörper (13), welcher in Gestalt eines Strangpressprofils ausgebildet ist, aus Aluminium oder einer Aluminiumlegierung stranggepresst ist und eine Breite von wenigstens 200 mm, bevorzugt wenigstens 300 mm und besonders bevorzugt wenigstens 400 mm aufweist, mit
- zwei voneinander beabstandeten Wandungen (23a,23b), welche an zwei gegenüberliegenden Seiten fluiddicht miteinander verbunden sind und innerhalb ihrer Flächen an einer Mehrzahl von Verbindungsstellen miteinander verbunden sind und
- einem Durchströmungsraum (27), welcher zwischen den zwei Wandungen (23a,23b) definiert ist und
- zwei Sammelrohre (15a,15b), welche einen kreisförmigen Querschnitt aufweisen und welche an offenen gegenüberliegenden Seiten (19a,19b) des Wärmetauscherkörpers (13) fluiddicht angeordnet sind und in durchströmbarer Verbindung mit dem Durchströmungsraum (27) stehen,
**dadurch gekennzeichnet,**
**dass** die den Sammelrohren (15a,15b) zugewandten Enden des Wärmetauscherkörpers (27) derart an die Krümmung der Sammelrohre (15a,15b) angepasst sind, dass wenigstens eine Wandung (23a,23b) eine Tangente an die Sammelrohre (15a,15b) bildet, wodurch jeweils eine erzeugende Linie der Sammelrohre (15a,15b) und eine Wandung (23a,23b) in einer Ebene liegen.

2. Flachwärmetauscher nach Anspruch 1, **dadurch gekennzeichnet, dass** zwischen den Stirnseiten der Wandung (23a,23b), welche mit jeweils einer erzeugenden Linie der Sammelrohre (15a,15b) in einer Ebene liegt, und den Sammelrohren (15a,15b) ein Spalt vorgesehen ist.

3. Flachwärmetauscher nach Anspruch 1 oder 2, **dadurch gekennzeichnet, dass** die zwei Sammelrohre (15a,15b) jeweils eine Mehrzahl von Durchgangsöffnungen aufweisen, welche dem Durchströmungsraum (27) zugewandt sind und mit dem Durchströmungsraum (27) in Strömungsverbindung stehen.

4. Flachwärmetauscher nach einem der Ansprüche 1 bis 2, **dadurch gekennzeichnet, dass** das Durchströmungsvolumen des Durchströmungsraums (27) durch Füllkörper (22) reduziert ist.

5. Flachwärmetauscher nach einem der Ansprüche 1 bis 4, **dadurch gekennzeichnet, dass** der Wärmetauscherkörper (13) eine Stärke von höchstens 20 mm, bevorzugt höchstens 15 mm und besonders bevorzugt höchstens 10 mm und mindestens 2 mm, bevorzugt mindestens 5 mm und besonders bevorzugt mindestens 8 mm aufweist.

6. Flachwärmetauscher nach einem der Ansprüche 1 bis 5, **dadurch gekennzeichnet, dass** die beiden Sammelrohre (15a,15b) mit dem Wärmetauscherkörper (27) verschweisst sind.

7. Flachwärmetauscher nach einem der Ansprüche 1 bis 6, **dadurch gekennzeichnet, dass** die Durchgangsöffnungen (17) eine Gestalt haben, welche die Verwirbelung des Fluids beim Einströmen in den Durchströmungsraum (27) verstärkt.

8. Flachwärmetauscher nach einem der Ansprüche 1 bis 7, **dadurch gekennzeichnet, dass** zwischen den beiden Sammelrohren (15a,15b) zwei oder mehr Wärmetauscherkörper (27) angeordnet sind.

9. Flachwärmetauscher nach einem der Ansprüche 1 bis 8, **dadurch gekennzeichnet, dass** die Wandstärken der Wandungen (23a,23b) 0,4 bis 10 mm, bevorzugt 0,6 bis 3 mm und ganz bevorzugt 0,8 bis 2 mm betragen.

10. Flachwärmetauscher nach einem der Ansprüche 1 bis 9, **dadurch gekennzeichnet, dass** Verbindungsstellen zwischen den Wandungen (23a,23b) im Wesentlichen parallele Stege (25) sind, welche sich entlang einer Vorzugsrichtung (21) des Wärmetauscherkörpers (13), welche Vorzugsrichtung (21) durch das Strangpressen definiert ist, erstrecken.

11. Flachwärmetauscher nach einem der Ansprüche 1 bis 10, **dadurch gekennzeichnet, dass** die Durchgangsöffnungen (17) eine Länge besitzen, welche im Wesentlichen dem Abstand zweier benachbarter Stege (25) entspricht.

12. Verwendung des Flachwärmetauschers (13) gemäss einem der vorangehenden Ansprüche als ein thermischer Kollektor oder in einem Hybridkollektor einer Solaranlage.

13. Hybridkollektor mit
- einem Flachwärmetauscher (11) nach einem der vorangehenden Ansprüche und
- einer Mehrzahl von Photovoltaikzellen, welche auf einer der beiden Wandungen befestigt sind.

14. Automatisiertes Verfahren zur Herstellung eines Flachwärmetauschers (11) nach Anspruch 1 umfassend die nacheinander folgenden Schritte:
- Herstellen eines Wärmetauscherkörpers (13) in Gestalt eines Strangpressprofils, wobei ein Metallpressling auf Umformtemperatur gebracht wird, mittels eines Stempels durch eine Matrize gepresst wird und der Wärmetauscherkörper (13) an einer bestimmten Länge abgeschnitten wird, wobei die Matrize derart ausgestaltet ist, dass der Wärmetauscherkörper (13) zwei gegenüberliegende Wandungen (23a,23b) und eine Mehrzahl von die Wandungen (23a,23b) verbindende Stege aufweist;
- Anpassen der Stirnseiten des Wärmetauscherkörpers (13) an die Krümmung zweier an dem Wärmetauscherkörper (13) stirnseitig anzuordnender Sammelrohre (15a,15b), vorzugsweise mittels vollautomatischer CNC-Fräsmaschinen;
- Vorsehen von einer Mehrzahl von Durchgangsöffnungen (17), in axialer Richtung der Sammelrohre (15a,15b), welche den Stirnseiten zugewandt sind; vorzugsweise mittels vollautomatischer CNC-Fräsmaschinen,
- Fluiddichtes Verschweisen der Sammelrohre (15a,15b) mit den Stirnseiten des Wärmetauscherkörpers (13) mittels eines vollautomatischen Schweissverfahrens, insbesondere mittels eines Schweissroboters.

## Claims

1. Flat heat exchanger (11), in particular as a support for photovoltaic cells, comprising
- a heat exchanger body (13) that is designed in the shape of an extruded profile, extruded from aluminum or from an aluminum alloy, and has a width of at least 200 mm, preferably of at least 300 mm and particularly preferably of at least 400 mm, with
- two walls spaced from one another (23a, 23b) that are fluid-tightly connected with each other on two opposed sides and are connected with each other inside their surfaces at a multitude of connection points and
- a throughflow chamber (27) that is defined between the two walls (23a, 23b) and
- two collector pipes (15a, 15b) that have a circular cross-section and that are fluid-tightly placed on open opposed sides (19a, 19b) of the heat exchanger body (13) and that are connected with the throughflow chamber (27) so that fluid can flow through,
**characterized in that** the ends of the heat exchanger body (27) that are facing the collector pipes (15a, 15b) are adapted to the curvature of the collector pipes (15a, 15b) in such a way that at least one wall (23a, 23b) forms a tangent to the collector pipes (15a, 15b) so that a generatrix of the collector pipes (15a, 15b) and a wall (23a, 23b) are respectively situated within one plane.

2. Flat heat exchanger according to claim 1, **characterized in that** a split is provided between the front sides of the wall (23a, 23b) that is situated in one plane with respectively one generatrix of the collector pipes (15a, 15b) and the collector pipes (15a, 15b).

3. Flat heat exchanger according to claim 1 or 2, **characterized in that** each of the two collector pipes (15a, 15b) has a multitude of passage openings that are facing the throughflow chamber (27) and are connected with the throughflow chamber (27) so that fluid can flow through.

4. Flat heat exchanger according to one of the claims 1 to 2, **characterized in that** the throughflow volume of the throughflow chamber (27) is reduced by fillers (22).

5. Flat heat exchanger according to one of the claims 1 to 4, **characterized in that** the heat exchanger body (13) has a maximum thickness of 20 mm, preferably a maximum thickness of 15 mm and particularly preferably a maximum thickness of 10 mm and at least 2 mm, preferably of at least 5 mm and particularly preferably of at least 8 mm.

6. Flat heat exchanger according to one of the claims 1 to 5, **characterized in that** both collector pipes (15a, 15b) are welded to the heat exchanger body (27).

7. Flat heat exchanger according to one of the claims 1 to 6, **characterized in that** the passage openings (17) are designed in such a way that the turbulence of the fluid is reinforced when flowing into the throughflow chamber (27).

8. Flat heat exchanger according to one of the claims 1 to 7, **characterized in that** two heat exchanger bodies (27) or more are placed between the two collector pipes (15a, 15b).

9. Flat heat exchanger according to one of the claims 1 to 8, **characterized in that** the wall thicknesses of the walls (23a, 23b) are 0,4 to 10 mm, preferably 0,6 to 3 mm and particularly preferably 0,8 to 2 mm.

10. Flat heat exchanger according to one of the claims 1 to 9, **characterized in that** connection points between the walls (23a, 23b) are substantially parallel webs (25) that extend along a preferred direction (21) of the heat exchanger body (13), which preferred direction (21) is defined by the extrusion.

11. Flat heat exchanger according to one of the claims 1 to 10, **characterized in that** the passage openings (17) have a length that substantially corresponds to the distance between two adjacent webs (25).

12. Use of the flat heat exchanger (13) according to one of the preceding claims as a thermal collector or in a hybrid collector of a solar plant.

13. Hybrid collector with
- a flat heat exchanger (11) according to one of the preceding claims and
- a multitude of photovoltaic cells that are fixed on one of the two walls.

14. Automated process for manufacturing a flat heat exchanger (11) according to claim 1 comprising the successive steps:
- manufacturing of a heat exchanger body (13) in the shape of an extruded profile, wherein a pellet of metal is heated to a forming temperature, is pressed by a matrix by means of a stamp and the heat exchanger body (13) is cut off at a given length, wherein the matrix is designed in such a way that the heat exchanger body (13) has two opposed walls (23a, 23b) and a multitude of webs connecting the walls (23a, 23b);
- adjusting of the front sides of the heat exchanger body (13) to the curvature of two collector pipes (15a, 15b) to be placed on the front side on the heat exchanger body (13), preferably by means of fully automatic CNC-milling machines;
- providing of a multitude of passage openings (17) in axial direction of the collector pipes (15a, 15b) that are facing the front sides, preferably by means of fully automatic CNC-milling machines;
- fluid-tight welding of the collector pipes (15a, 15b) with the front sides of the heat exchanger body (13) by means of a fully automatic welding process, in particular by means of a welding robot.

## Revendications

1. Echangeur de chaleur plat (11), en particulier comme support pour des cellules photovoltaïques, comprenant :
- un corps d'échangeur de chaleur (13) qui est configuré en forme de profilé extrudé, qui est extrudé en aluminium ou en un alliage d'aluminium et qui a une largeur d'au moins 200 mm, de préférence d'au moins 300 mm et de manière particulièrement préférée d'au moins 400 mm avec
- deux parois espacées l'une de l'autre (23a, 23b) qui sont reliées l'une à l'autre en étant étanches au fluide sur deux côtés opposés et qui sont reliées l'une à l'autre à l'intérieur de leurs surfaces à une multitude de points de raccordement et
- un espace de circulation (27) qui est défini entre les deux parois (23a, 23b) et
- deux tubes collecteurs (15a, 15b) qui présentent une section circulaire et qui sont placés sur des côtés opposés ouverts (19a, 19b) du corps d'échangeur de chaleur (13) en étant étanches au fluide et qui sont reliés à l'espace de circulation (27) en pouvant être parcourus par un fluide,
**caractérisé en ce**
**que** les extrémités du corps d'échangeur de chaleur (27) tournées vers les tubes collecteurs (15a, 15b) sont adaptées à la courbure des tubes collecteurs (15a, 15b) de telle manière qu'au moins une paroi (23a, 23b) forme une tangente aux tubes collecteurs (15a, 15b) si bien qu'une génératrice de chacun des tubes collecteurs (15a, 15b) et une paroi (23a, 23b) se situent dans un plan.

2. Echangeur de chaleur plat selon la revendication 1, **caractérisé en ce qu'**il est prévu une fente entre les faces frontales de la paroi (23a, 23b) qui se situe dans un plan avec respectivement une ligne génératrice des tubes collecteurs (15a, 15b) et les tubes collecteurs (15a, 15b).

3. Echangeur de chaleur plat selon la revendication 1 ou 2, **caractérisé en ce que** les deux tubes collecteurs (15a, 15b) présentent chacun une multitude d'ouvertures de passage qui sont tournées vers l'espace de circulation (27) et qui sont en relation avec l'espace de circulation (27) de manière à pouvoir être parcourues par du fluide.

4. Echangeur de chaleur plat selon l'une des revendications 1 à 2, **caractérisé en ce que** le volume de circulation de l'espace de circulation (27) est réduit par des corps de remplissage (22).

5. Echangeur de chaleur plat selon l'une des revendications 1 à 4, **caractérisé en ce que** le corps d'échangeur de chaleur (13) présente une épaisseur de 20 mm maximum, de préférence de 15 mm maximum et de manière particulièrement préférée de 10 mm maximum et d'au moins 2 mm, de préférence d'au moins 5 mm et de manière particulièrement préférée d'au moins 8 mm.

6. Echangeur de chaleur plat selon l'une des revendications 1 à 5, **caractérisé en ce que** les deux tubes collecteurs (15a, 15b) sont soudés au corps d'échangeur de chaleur (27).

7. Echangeur de chaleur plat selon l'une des revendications 1 à 6, **caractérisé en ce que** les ouvertures de passage (17) ont une configuration qui renforce le tourbillonnement du fluide lors de l'afflux dans l'espace de circulation (27).

8. Echangeur de chaleur plat selon l'une des revendications 1 à 7, **caractérisé en ce que** deux corps d'échangeur de chaleur (27) ou plus sont placés entre les deux tubes collecteurs (15a, 15b).

9. Echangeur de chaleur plat selon l'une des revendications 1 à 8, **caractérisé en ce que** les épaisseurs de paroi des parois (23a, 23b) sont de 0,4 à 10 mm, de préférence de 0,6 à 3 mm et de manière particulièrement préférée de 0,8 à 2 mm.

10. Echangeur de chaleur plat selon l'une des revendications 1 à 9, **caractérisé en ce que** des points de raccordement entre les parois (23a, 23b) sont des traverses substantiellement parallèles (25) qui s'étendent le long d'une direction préférentielle (21) du corps d'échangeur de chaleur (13), laquelle direction préférentielle (21) est définie par l'extrusion.

11. Echangeur de chaleur plat selon l'une des revendications 1 à 10, **caractérisé en ce que** les ouvertures de passage (17) ont une longueur qui correspond substantiellement à l'écart entre deux traverses voisines (25).

12. Utilisation de l'échangeur de chaleur plat (13) selon l'une des revendications précédentes en tant que collecteur thermique ou dans un collecteur hybride d'une installation solaire.

13. Collecteur hybride avec
- un échangeur de chaleur plat (11) selon l'une des revendications précédentes et
- une multitude de cellules photovoltaïques qui sont fixées sur l'une des deux parois.

14. Procédé automatisé pour la fabrication d'un échangeur de chaleur plat (11) selon la revendication 1 comprenant les étapes successives :
- fabrication d'un corps d'échangeur de chaleur (13) en forme de profilé extrudé, un comprimé métallique étant amené à une température de formage, pressé par une matrice au moyen d'un poinçon et le corps d'échangeur de chaleur (13) étant découpé à une longueur déterminée, la matrice étant configurée telle que le corps d'échangeur de chaleur (13) présente deux parois opposées (23a, 23b) et une pluralité de traverses qui relient les parois (23a, 23b) ;
- adaptation des faces frontales du corps d'échangeur de chaleur (13) à la courbure de deux tubes collecteurs (15a, 15b) qui doivent être placés sur le corps d'échangeur de chaleur (13) sur la face frontale, de préférence au moyen de fraiseuses CNC entièrement automatiques ;
- prévision d'une multitude d'ouvertures de passage (17) dans le sens axial des tubes collecteurs (15a, 15b) qui sont tournés vers les faces frontales, de préférence au moyen de fraiseuses CNC entièrement automatiques ;
- soudage étanche au fluide des tubes collecteurs (15a, 15b) avec les faces frontales du corps d'échangeur de chaleur (13) au moyen d'un procédé de soudage entièrement automatique, en particulier au moyen d'un robot de soudage.
